# FASCICULE DE BREVET EUROPEEN

(11) **EP 0 536 007 B1**
(45) Date de publication et mention de la délivrance du brevet: **07.12.1994**
(21) Numéro de dépôt: 92402168.6
(22) Date de dépôt: 28.07.1992
(51) Int. Cl.: B60T 8/18, B60T 13/575

(54) **Servomoteur d'assistance au freinage à réaction modulée**
Unterdruckbremskraftverstärker mit modulierter Reaktion
Vacuum booster with modulated reaction

(30) Priorité: 30.09.1991 FR 9111982
(43) Date de publication de la demande: 07.04.1993
(73) Titulaire: ALLIEDSIGNAL EUROPE SERVICES TECHNIQUES, 93700 Drancy (FR)
(72) Inventeur: Castel, Philippe, F-75005 Paris (FR)
(74) Mandataire: Bentz, Jean-Paul

(56) Documents cités:
- DE-A- 2 622 534
- DE-A- 3 910 283
- DE-A- 3 939 499

## Description

La présente invention concerne les servomoteurs à dépression utilisés à bord des véhicules automobiles pour assurer une aide au freinage de ceux-ci.

On sait qu'un servomoteur d'assistance au freinage d'un véhicule, comprend une enveloppe et une membrane qui divise de manière étanche l'intérieur de l'enveloppe en une chambre avant et une chambre arrière, un piston creux mobile dans l'enveloppe recevant un organe d'entrée destiné à être relié à une pédale de frein, un ensemble de sortie comprenant un couvercle et une tige de sortie destinée à être reliée à un piston d'un maître-cylindre, un disque de réaction en un matériau déformable disposé entre le piston creux et le couvercle afin de recevoir une image de la force de sortie du servomoteur lors de sa mise en oeuvre pour provoquer une déformation du disque de réaction tendant à repousser l'organe d'entrée en fonction de l'image de la force de sortie.

De tels servomoteurs sont bien connus dans l'Art et il est inutile ici d'en expliquer le fonctionnement.

Les documents FR-A-2 592 620 et EP-A-0 341 101, parmi beaucoup d'autres, décrivent des perfectionnements apportés notamment dans le domaine de la maîtrise de la réaction ressentie sur l'organe d'entrée lors d'un freinage.

Plus particulièrement, dans EP-A-0 341 101, le problème résolu est celui d'une sensation progressive à la pédale lors du passage de la phase assistée à la phase non-assistée lors d'un freinage important. Dans ce but, l'ensemble de sortie est réalisé en deux parties déplaçables l'une par rapport à l'autre de manière à agir sur des surfaces différentes du disque de réaction.

Il existe d'autres situations où il est favorable de modifier la sensibilité à la pédale pour une pression déterminée dans le circuit de freinage. Inversement, il est utile qu'une même sensation à la pédale corresponde à une intensité de freinage plus grande pour un véhicule chargé que pour un véhicule à vide, pour une même décélération souhaitée par le conducteur.

La présente invention a précisément pour but un servomoteur permettant de moduler la réaction ressentie par le conducteur en fonction de la charge du véhicule.

Pour ce faire, un coussinet fluidique étanche dont la pression interne est fonction de la charge du véhicule est interposé entre la tige de sortie et le couvercle de l'ensemble de sortie, ce coussinet reposant sur le piston creux de façon à moduler l'image de la force de sortie en fonction de la charge du véhicule.

De préférence, la tige de sortie est solidaire d'une coupelle s'étendant dans la chambre avant, le coussinet précité étant disposé entre cette coupelle et le piston creux.

De préférence également, la pression interne dans le coussinet est en outre fonction de la pression régnant dans la chambre arrière du servomoteur.

L'invention sera mieux comprise et d'autres buts, avantages et caractéristiques de celle-ci apparaîtront plus clairement à la lecture de la description qui suit d'un mode de réalisation préféré donné à titre non limitatif et à laquelle sont jointes deux planches de dessin sur lesquelles.
La Figure 1 représente schématiquement en vue partielle en coupe un servomoteur conforme à la présente invention, et
La Figure 2 illustre schématiquement un mode de réalisation d'un moyen de valve commandant la pression dans le coussinet.

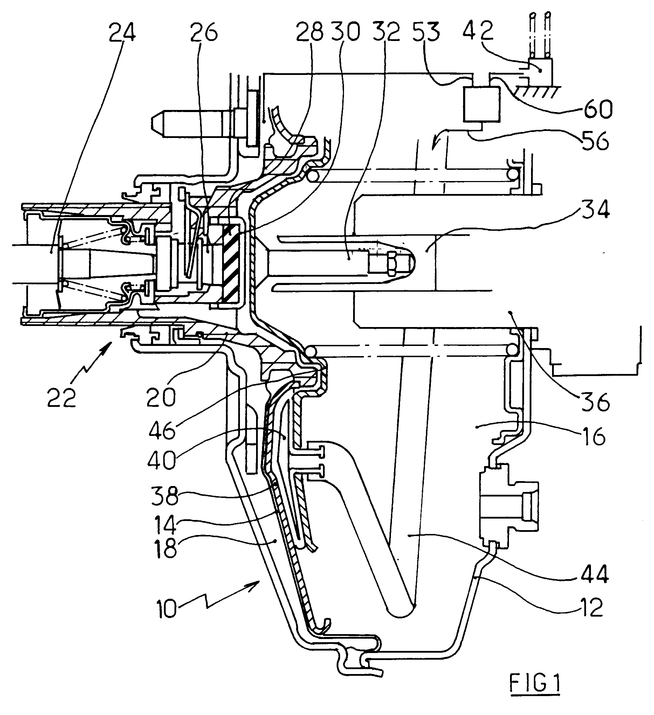

En référence maintenant à la Figure 1, le servomoteur 10 est constitué par une enveloppe 12 intérieurement divisée de façon étanche par une membrane 14 en deux chambres dites respectivement chambre avant 16 et chambre arrière 18. Un piston creux 20 porte d'une part un bord périphérique de la membrane 14 et d'autre part des moyens de valves 22 commandé par un organe d'entrée 24 relié à une pédale de frein (non représentée).

De façon classique, l'organe d'entrée 24 appuie sur un plongeur 26 disposé en regard d'un disque de réaction 28 enfermé entre le piston creux 20 et un couvercle 30 de l'ensemble de sortie. Cet ensemble de sortie comprend en outre une tige de sortie 32 susceptible d'actionner le piston 34 d'un maître-cylindre 36 très schématiquement représenté.

La tige de sortie 32 est solidaire d'une coupelle 46 s'étendant dans la chambre avant 16 en regard du piston creux 20 prolongé ici circonférentiellement d'un disque 38.

Un coussinet fluidique 40 est interposé entre la coupelle 46 et le piston creux 20 (ou le disque 38).

Ce coussinet fluidique 40 est étanche et reçoit l'information de charge par un capteur fluidique 42 de la charge du véhicule.

Ce capteur fluidique 42 de la charge est symboliquement représenté Figure 1 car il ne fait pas partie en soi de la présente invention. Il pourra, par exemple, être favorablement constitué par le capteur décrit dans FR-A-2 649 046 relatant un capteur en forme de chambre étanche disposé entre un ressort de suspension et une base.

Comme indiqué précédemment, il est préférable que la pression dans le coussinet 40 soit également fonction de la pression régnant dans la chambre arrière 18 du servomoteur.

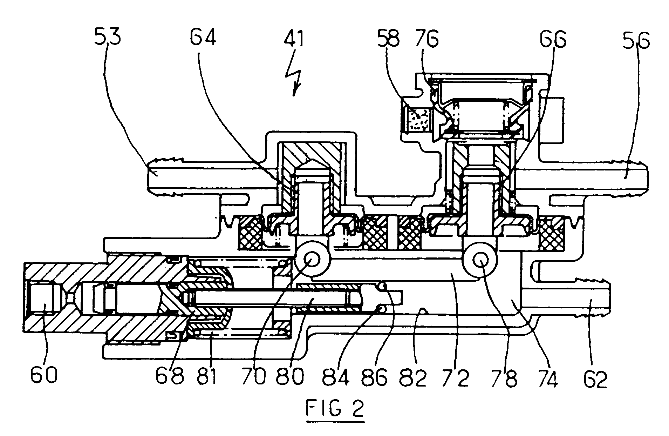

A cet effet, le coussinet 40 est relié par un conduit étanche 44 à un moyen de valve 41 représenté plus en détail Figure 2.

Ce moyen de valve comporte plusieurs canalisations : la canalisation 53 est reliée à la chambre arrière 18 du servomoteur ; la canalisation 56 est reliée au conduit 44 ; la canalisation 62 est reliée à la source de dépression, par exemple celle à laquelle est reliée la chambre avant 16 ; et la canalisation 60 est reliée au capteur fluidique 42.

Le moyen de valve représenté comprend trois pistons 64, 66, 68 disposés de manière à coulisser de façon étanche.

Une face du piston 64 reçoit la pression régnant dans la chambre arrière 18 par la canalisation 53.

L'autre face de ce piston 64 est montée à rotation par un axe 70 à l'extrémité d'un bras 72 dans une chambre 74 reliée à la source de dépression par la canalisation 62.

Le piston 66 présente une face susceptible de manoeuvrer un clapet de valve 76 ouvrant ou fermant une communication entre une entrée d'air à pression atmosphérique 58 et la canalisation 56. L'autre face de ce piston 66 est montée à rotation à l'autre extrémité du bras 72 par un axe 78.

Le piston 68 reçoit sur l'une de ses faces par la canalisation 60 une pression fonction de la charge du véhicule et issue du capteur fluidique 42. Son autre face comporte un prolongement faisant poussoir 80. Le piston 68 est rappelé en position de repos à l'aide d'un ressort précontraint 81.

L'extrémité du poussoir 80 opposée au piston 68 est pourvue d'un élément prenant appui d'une part sur une surface fixe 82 de la chambre 74 et d'autre part sur le bras 72 entre ses deux axes d'extrémité 70, 78. Cet élément est favorablement constitué de deux roulettes 84, 86 évitant ainsi d'engendrer des forces de frottement trop importantes et déterminant sur le bras 72 un point variable d'appui de manière que le bras 72 constitue un levier.

On comprendre qu'avec cet arrangement, le piston 68 prend une position fonction de la charge du véhicule, position qui détermine celle du point d'appui de la roulette 86 sur le bras 72.

Ainsi lors d'un freinage commandé par la tige d'actionnement 24 ; la pression dans la chambre arrière 18 va mouvoir le piston 64. Le mouvement de ce dernier est transmis au piston 66 avec coefficient multiplicateur fonction de la position exacte de la roulette 86 sur le bras 72, c'est-à-dire de la charge du véhicule.

Ainsi lorsque le véhicule est à vide, le piston 68 est en butée vers la gauche de la Figure 2, la roulette 86 est également dans sa position extrême vers la gauche, ce qui empêche la transmission de l'effort du piston 64 au piston 66, et, par suite, empêche l'ouverture du clapet 76 et le remplissage du coussinet 40. Lors d'un freinage, le disque de réaction 28 reçoit alors l'intégralité de la force de sortie.

Lorsque le véhicule est chargé, lors d'un freinage, le coussinet 40 présente une pression interne fonction de la charge. La tige de sortie 32 ne transmet alors qu'une partie de la force de sortie au disque de réaction 28, partie qui sera donc fonction de la pression dans le coussinet 40, donc de la charge du véhicule.

Ce conducteur ne verra ainsi sensiblement pas de différence pour obtenir une décélération identique avec un véhicule chargé qu'avec un véhicule non chargé, alors même que les pressions en jeu seront très nettement différentes.

L'Homme de l'Art pourra apporter de nombreuses modifications à la présente invention sans sortir du cadre de l'invention. Par exemple, dans l'exemple représenté, le coussinet 40 affecte une forme annulaire et est disposé entre la coupelle 46 et le prolongement 38 du piston creux 20.

Le coussinet aurait tout aussi bien pu affecter une autre forme et être disposé différemment. En effet, sa fonction étant de soulager le disque de réaction, il lui suffit de prendre appui directement ou indirectement sur le piston creux 20.

## Revendications

1. Servomoteur (10) d'assistance au freinage d'un véhicule, comprenant une enveloppe (12) et une membrane (14) qui divise de manière étanche l'intérieur de l'enveloppe en une chambre avant (16) et une chambre arrière (18), un piston creux (20) mobile dans ladite enveloppe recevant un organe d'entrée (24) destiné à être relié à une pédale de frein, un ensemble de sortie comprenant un couvercle (30) et une tige de sortie (32) destinée à être reliée à un piston (34) d'un maître-cylindre (36), un disque de réaction (28) en un matériau déformable disposé entre ledit piston creux (20) et ledit couvercle (30) afin de recevoir une image de la force de sortie du servomoteur (10) lors de sa mise en oeuvre pour provoquer une déformation du disque de réaction (28) tendant à repousser l'organe d'entrée (24) en fonction de ladite image, caractérisé en ce qu'un coussinet fluidique étanche (40) dont la pression interne est fonction de la charge du véhicule est interposé entre ladite tige de sortie (32) et ledit couvercle (30), ledit coussinet (40) reposant sur ledit piston creux (20) de façon à moduler ladite image en fonction de la charge du véhicule.

2. Servomoteur selon la revendication 1 caractérisé en ce que la pression interne dans ledit coussinet (40) est également fonction de la pression régnant dans ladite chambre arrière (18).

3. Servomoteur selon la revendication 1 ou 2 caractérisé en ce que ladite tige de sortie (32) est solidaire d'une coupelle (46) s'étendant dans la chambre avant, ledit coussinet (40) étant disposé entre ladite coupelle (46) et ledit piston creux (20) ou un prolongement (38) de ce dernier.

4. Servomoteur selon la revendication 3 caractérisé en ce que le coussinet affecte une forme sensiblement annulaire.

5. Servomoteur selon l'une quelconque des revendications 2 à 4 caractérisé en ce que ledit coussinet (40) est relié par l'intermédiaire d'un moyen de valve (41) à une source de fluide sous pression.

6. Servomoteur selon la revendication 5, caractérisé en ce que ledit moyen de valve (41) comprend un premier piston (64) sur une face duquel est appliquée la pression régnant dans ladite chambre arrière (18) et dont l'autre face est montée à rotation à une extrémité d'un bras (72), un deuxième piston (66) dont une face commande un clapet (76) susceptible de relier ledit coussinet (40) à ladite source de fluide et l'autre face est montée à rotation à l'autre extrémité dudit bras (72), un poussoir (80) dont la position est fonction de ladite charge déterminant un point variable d'appui pour ledit bras (72) de manière à ce que ce dernier forme levier.

7. Servomoteur selon la revendication 6, caractérisé en ce qu'une extrémité dudit poussoir est pourvue d'un élément prenant appui d'une part sur une surface fixe (82) et d'autre part entre les deux dites extrémités dudit bras (72).

8. Servomoteur selon la revendication 7, caractérisé en ce que ledit élément est constitué par au moins une roulette (84, 86).

9. Servomoteur selon l'une quelconque des revendications 6 à 8, caractérisé en ce que ledit poussoir (80) est constitué par un prolongement à une extrémité d'un piston (68) à l'autre extrémité duquel est appliquée une force engendrée par ledit capteur fluidique (42) de la charge du véhicule, ledit piston (68) étant rappelé en position de repos par un moyen élastique du type ressort (81).

## Claims

1. Brake-booster (10) of a vehicle, comprising a casing (12) and a diaphragm (14) which divides in a sealed manner the interior of the casing into a front chamber (16) and a back chamber (18), a hollow piston (20) movable in said casing receiving an input member (24) adapted to be connected to a brake pedal, an output assembly comprising a lid (30) and an output rod (32) adapted to be connected to a piston (34) of a master cylinder (36), a reaction disk (28) in a deformable material arranged between said hollow piston (20) and said lid (30) so as to receive an image of the output force of the booster (10) when it is put into operation in order to cause a deformation of the reaction disk (28) tending to push back the input member (24) as a function of said image, characterized in that a sealed fluid bearing (40), the internal pressure of which is a function of the load of the vehicle, is interposed between said output rod (32) and said lid (30), said bearing (40) resting on said hollow piston (20) so as to modulate said image as a function of the load of the vehicle.

2. Booster according to claim 1 characterized in that the internal pressure in said bearing (40) is also a function of the pressure prevailing in said back chamber (18).

3. Booster according to claim 1 or 2 characterized in that said output rod (32) is rigidly attached to a cup (46) extending into the front chamber, said bearing (40) being arranged between said cup (46) and said hollow piston (20) or an extension (38) of the latter.

4. Booster according to claim 3 characterized in that the bearing assumes a substantially annular shape.

5. Booster according to any one of claims 2 to 4 characterized in that said bearing (40) is connected via a valve means (41) to a source of fluid under pressure.

6. Booster according to claim 5, characterized in that said valve means (41) comprises a first piston (64) onto one face of which is applied the pressure prevailing in said back chamber (18) and the other face of which is rotatably mounted at one end of an arm (72), a second piston (66) one face of which controls a valve (76) capable of connecting said bearing (40) to said source of fluid and the other face of which is rotatably mounted at the other end of said arm (72), a push rod (80) the position of which is a function of said load determining a variable point of support for said arm (72) so that the latter forms a lever.

7. Booster according to claim 6, characterized in that one end of said push rod is provided with an element bearing on the one hand against a fixed surface (82) and on the other hand between the two said ends of said arm (72).

8. Booster according to claim 7, characterized in that said element is constituted by at least one roller (84, 86).

9. Booster according to any one of claims 6 to 8, characterized in that said push rod (80) is constituted by an extension at one end of a piston (68) at the other end of which is applied a force generated by said fluid sensor (42) of the load of the vehicle, said piston (68) being returned to the rest position by a resilient means of the spring type (81).

## Patentansprüche

1. Servomotor (10) zur Fahrzeugbremsunterstützung, mit einem Gehäuse (12) und einer Membran (14), die das Innere des Gehäuses in dichter Weise in eine vordere Kammer (16) und eine hintere Kammer (18) unterteilt, sowie einem Hohlkolben (20), der in dem Gehäuse beweglich ist und ein zur Verbindung mit einem Bremspedal vorgesehenes Eingangsorgan (24) sowie eine Ausgangsbaugruppe aufnimmt, die eine Abdeckung (30) und eine Ausgangsstange (32) enthält, welche dazu vorgesehen ist, mit einem Kolben (34) eines Hauptzylinders (36) verbunden zu werden, und einer Reaktionsscheibe (28) aus einem verformbaren Material, die zwischen dem Hohlkolben (20) und der Abdeckung (30) angeordnet ist, um ein Abbild der Ausgangskraft des Servomotors (10) bei seiner Betätigung zu erhalten, damit eine Verformung der Reaktionsscheibe (28) hervorgerufen wird, welche dazu neigt, das Eingangsorgan (24) in Abhängigkeit von diesem Abbild zurückzudrücken, dadurch gekennzeichnet, daß zwischen der Ausgangsstange (32) und der Abdeckung (30) ein dichtes Fluidkissen (40) eingesetzt ist, dessen Innendruck von der Beladung des Fahrzeugs abhängt, wobei das Kissen (40) an dem Hohlkolben (20) anliegt, um das Abbild in Abhängigkeit von der Beladung des Fahrzeugs zu modulieren.

2. Sevomotor nach Anspruch 1, dadurch gekennzeichnet, daß der Innendruck des Kissens (40) auch von dem in der hinteren Kammer (18) herrschenden Druck abhängt.

3. Servomotor nach Anspruch 1 oder 2, dadurch gekennzeichnet, daß die Ausgangsstange (32) fest mit einem sich in der vorderen Kammer erstreckenden Teller (46) verbunden ist, Wobei das Kissen (40) zwischen dem Teller (46) und dem Hohlkolben (20) oder einer Verlängerung (38) des letzteren angeordnet ist.

4. Servomotor nach Anspruch 3, dadurch gekennzeichnet, daß das Kissen eine im wesentlichen ringförmige Gestalt aufweist.

5. Servomotor nach einem der Ansprüche 2 bis 4, dadurch gekennzeichnet, daß das Kissen (40) über ein Ventilmittel (41) mit einer Druckfluidquelle verbunden ist.

6. Servomotor nach Anspruch 5, dadurch gekennzeichnet, daß das Ventilmittel (41) einen ersten Kolben (64) enthält, an dessen eine Seite der in der hinteren Kammer (18) herrschende Druck angelegt ist und dessen andere Seite drehbar an einem Ende eines Armes (72) angebracht ist, sowie einen zweiten Kolben (66), dessen eine Seite ein Ventilelement (76) steuert, das in der Lage ist, das Kissen (40) mit der Fluidquelle zu verbinden, und dessen andere Seite drehbar mit dem anderen Ende des Armes (72) verbunden ist, und einen Stößel (80), dessen Position von der Beladung abhängt und der einen variablen Abstützpunkt für den Arm (72) darstellt, so daß letzterer einen Hebel bildet.

7. Servomotor nach Anspruch 6, dadurch gekennzeichnet, daß ein Ende des Stößels mit einem Element versehen ist, welches sich zum einen an einer feststehenden Fläche (82) und zum anderen zwischen den beiden Enden des Arms (72) abstützt.

8. Servomotor nach Anspruch 7, dadurch gekennzeichnet, daß das Element durch wenigstens eine Rolle (84, 86) gebildet ist.

9. Servomotor nach einem der Ansprüche 6 bis 8, dadurch gekennzeichnet, daS der Stößel (80) durch eine Verlängerung an einem Ende eines Kolbens (68) gebildet ist, an dessen anderes Ende eine Kraft angelegt ist, die von dem mit Fluid arbeitenden Aufnehmer (42) der Fahrzeugbeladung erzeugt wird, wobei der Kolben (68) von einem elastischen Mittel nach Art einer Feder (81) in die Ruhestellung zurückgestellt wird.
